# EUROPEAN PATENT APPLICATION

(11) **EP 4 386 275 A1**
(43) Date of publication of application: **19.06.2024**
(21) Application number: 22213811.7
(22) Date of filing: 15.12.2022
(51) Int. Cl.: F24F 11/72, F24F 11/74, F24F 13/14, G01L 19/00, G05D 7/06

(54) **AIR FLOW CONTROL UNIT, SYSTEM FOR VENTILATION SYSTEM OF BUIDLING AND METHOD FOR CONTROLLING VENTILATION OF BUILDING**

(71) Applicant: Halton OY, 47400 Kausala (FI)
(72) Inventor: Hagström, Kim, 47400 Kausala (FI); Kohtaniemi, Vili, 47400 Kausala (FI); Kanerva, Pekka, 47400 Kausala (FI); Parkkila, Raimo, 47400 Kausala (FI); Purho, Harri, 47400 Kausala (FI)
(74) Representative: Papula Oy

(57) **Abstract**

An air flow control unit for controlling air flow in a duct, comprising a damper (10), which is arranged to be installed to the duct, wherein the air flow unit comprises a measurement unit comprising at least two measurement areas (20a, 20b, 20c,...) so that one measurement area is arranged on different side of the damper (10) in air flow direction than another measurement area, wherein each measurement area comprises at least one measurement probe (21a, 21b, 21c,...) having a measurement point (22a, 22b, 22c,...) for measuring pressure, the first measurement area (20a) is arranged on the inlet side of the damper (10), and the first measurement area comprises a first measurement probe (21a) having a first measurement point (22a), and a first wall (23a) behind the first measurement point in air flow direction causing a change in the air flow at the first measurement area (20a).

## Description

### TECHNICAL FIELD

The present invention relates to air flow control units and especially air flow control units of variable air volume (VAV) systems.

### BACKGROUND OF THE ART

In ventilation units, supply air is introduced into a space, such as a room of a building, and exhaust air is removed from the space. The needed amount and volume of supply air varies and is dependent on the conditions in the space, e.g. number of people in the room, temperature of the room etc. For controlling the supply air volume, a damper or dampers may be arranged inside the air ducts. The damper may comprise for example a blade or blades which are rotatable about an axis perpendicular to the air flow direction in the duct. The damper may be adjusted between closed position, i.e. damper blade is rotated in perpendicular position to the air flow direction, wherein the damper is blocking the air flow inside the duct, and fully open position, i.e. the damper blade is rotated in parallel position to the air flow direction. As known, position of the damper blade affects to the velocity of the air flow.

Typically, a building has a central ventilation system for supplying air into the rooms and exhaust air from the rooms. Each room comprise at least one supply air inlet and an adjusting means, such as a damper, for controlling the supply air volume diffused into the room. If one damper is adjusted to reduce the air flow volume into one room, the pressure inside the air duct increases and velocity of the air flows into the other rooms increase, which may lead to temperature drop in the other rooms. To prevent this effect, the ventilation units may comprise sensors arranged near the dampers within the air duct to measure air flow properties inside the duct. One solution is to use pressure sensors to measure air pressure inside the duct. However, traditional units have challenge to measure and control low air flow velocity due to insufficient measurement pressure. Also, traditional air pressure measurement units in the air ducts struggle to measure the pressure when there are disturbances in the air flow, e.g. after a turn of the ducting. Thus, the known sensors need some safety distance after the flow disturbances (e.g. a turn), which means that the known systems, i.e. the damper with air pressure sensors needs a lot of space.

### OBJECTIVE OF THE INVENTION

The objective of the device is to alleviate the disadvantages mentioned above.

In particular, it is an objective of the present device to provide a compact air flow control unit capable to provide enhanced air pressure data at proximity of an air damper in various environments.

### SUMMARY

According to a first aspect, the present invention provides an air flow control unit for controlling air flow in a duct. The air flow control unit comprises a damper, which is arranged to be installed to the duct, comprising:
- an inlet side, from which the air flow enters the damper,
- an outlet side, from which the air flow exits the damper, and
- at least one damper blade (11), arranged between the inlet side and the outlet side, configured to rotate about an axis perpendicular to the air flow direction. The air flow unit comprises a measurement unit comprising at least two measurement areas so that one measurement area is arranged on different side of the damper in air flow direction than another measurement area, wherein each measurement area comprises at least one measurement probe having a measurement point for measuring pressure. The first measurement area is arranged on the inlet side of the damper, and the first measurement area comprises a first measurement probe having a first measurement point, and a first wall behind the first measurement point in air flow direction causing a change in the air flow at the first measurement area.

The advantage of the device is that the pressure difference measurement is enhanced, and the pressure measurement is better protected from flow disturbances.

In an embodiment of the device, a second measurement area is arranged on the outlet side of the damper, and the second measurement area comprises a second measurement probe having a second measurement point, and a second wall in front of the second measurement point in air flow direction causing a change in the air flow at the second measurement area.

In an embodiment of the device, at least one of the first wall and the second wall is perpendicular to the air flow direction.

In an embodiment of the device, at least one of the first wall and the second wall is angled to the air flow direction.

In an embodiment of the device, at least one of the walls is partially curved around the measurement point next to said wall.

In an embodiment of the device, the curved wall encloses 45-270 degrees around the measurement point.

In an embodiment of the device, the wall at each measurement area is integrated part of the measurement probe on said measurement area.

In an embodiment of the device, at least one of the first wall and the second wall is integrated part of the damper so that a casing of the damper forms the wall.

In an embodiment of the device, at least one of the first wall and the second wall is arranged to be installed to the wall of the duct.

In an embodiment of the device, the height of the walls 3 to 30 mm.

In an embodiment of the device, comprising a controller connected to the measurement unit for receiving pressure measurement data and for calculating pressure difference between the inlet side and outlet side of the damper.

In an embodiment of the device, the controller is connected to a motor controlling at least one damper blade for adjusting the position of the damper based on the pressure difference.

In an embodiment of the device, the measurement unit comprises two or more measurement areas on each side of the damper.

In an embodiment of the device, the pressure at each side is averaged.

In an embodiment of the device, the maximum distance between measurement probe on the inlet side and the measurement probe on the outlet side is 2,5 x the length of the damper blade.

Another aspect of the invention is to provide a ventilation system of a building comprising two or more air flow control units according to any one of the preceding embodiments.

Another aspect of the invention is to provide a method for adjusting ventilation with an air flow control unit according to any one of the embodiments, wherein the method comprises steps of:
a. measuring pressure in front of the damper in air flow direction,
b. measuring pressure behind the damper in air flow direction,
c. detecting pressure difference,
d. receiving information of at least one damper blade position,
e. calculating air flow amount through the damper based on pressure difference and damper position,
f. adjusting ventilation based on calculated air flow amount and given set point.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** shows an air control unit for controlling air flow in duct,
**Fig. 2** shows an embodiment wherein four measurement areas is provided,
**Fig. 3** shows similar structure as figure 1, but the walls at the measurement areas are separate parts from the measurement probes,
**Fig. 4** shows an embodiment wherein four measurement areas are provided as in figure 2,
**Fig. 5 and 6** show an embodiment, wherein the damper comprises protrusion (figure 5) or protrusions (figure 6) towards the center axis of the duct,
**Fig. 7, 8 and 9** show a cross-sectional view of the damper in radial direction,
**Fig. 10** shows a cross-sectional view of a damper having two damper blades arranged on same plane in vertical direction,
**Fig. 11** shows a cross-sectional view of a damper, wherein the cross-sectional area of the damper (and the duct in which the damper is assembled), is circle,
**Fig. 12a and 12b** show schematic view of a measurement area comprising a measurement probe with a measurement point, and a wall.
**Fig. 13 and 14** show an air flow control unit having a measurement unit comprising measurement sensor or sensors located at a distance from the measurement probes,
**Fig. 15** shows an air control unit having a measurement unit connected to a controller, **and**
**Fig. 16a and 16b** show a cross-sectional side views of a damper having two damper blades.

### DETAILED DESCRIPTION

An air flow control unit is an apparatus which is arranged to be installed into a duct, in which air or other fluid is flowing. The air flow control unit may restrict air flow in a duct, and it is used for controlling air flow into a space, such as a room of a building. The duct, namely the cross-sectional shape of the duct, may be round, rectangular or any other shape. The air flow control unit comprises a damper, which is used for controlling the air flow through the air control unit. The damper has at least one damper blade, which may rotate around an axis, which is perpendicular to the air flow direction, between closed position and open position. In closed position, the damper blade blocks the air flow in the duct, and in open position, the damper blade is rotated to a position, wherein it least restricts the air flow. It should be understood that air flow may have turbulences or other small deviances inside the duct, but the air flow as a whole has a direction from one point towards another point, e.g. in figures from left to right.

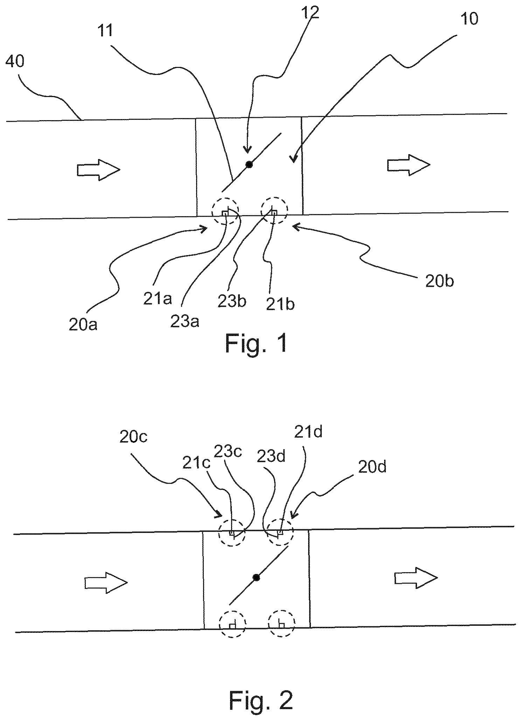

Figure 1 shows an air control unit for controlling air flow in duct 40. The air flow control unit comprises a damper 10 having an inlet side, from which the air flow enters the damper, and an outlet side, from which the air flow exits the damper. The air flow direction is shown with hollow arrows. The damper 10 comprises at least one damper blade 11, which is arranged between the inlet side and the outlet side. The damper blade is configured to rotate about an axis 12 perpendicular to the air flow direction. The air flow control unit comprises at least two measurement areas 20a, 20b, 20c,... comprising means to measure air flow pressure inside the duct. At least one measurement area is provided on the inlet side of the damper and at least one measurement area is provided on the outlet side of the damper, i.e. the measurement areas are on different sides of the damper in air flow direction. It should be understood that the measurement areas may be inside the perimeter of the damper or outside of the perimeter of the damper. Being on the inlet side means that it is located before the damper blade axis 12 in air flow direction and being on the outlet side means that it is located after the damper blade axis 12 in air flow direction. Each measurement area comprises at least one measurement probe 21a, 21b, 21c,... having a measurement point for measuring pressure. The measurement point is a location, which is used to define the pressure.

In figure 1, two measurement areas (shown as dotted circles) are provided so that a first measurement area 20a is located on the inlet side of the damper, and a second measurement area 20b is located on the outlet side of the damper. The first measurement area 20a comprises a first measurement probe 21a having a first measurement point 22a, and a first wall 23a behind the first measurement point 20a in air flow direction, i.e. between the first measurement point and the damper blade axis. The second measurement area 20b comprises a second measurement probe 21b having a second measurement point 22b, and a second wall 23b in front of the second measurement point 20b in air flow direction, i.e. between the second measurement point and the damper blade axis. The first wall 23a and the second wall 23b are perpendicular to the air flow direction.

Figure 2 shows an embodiment wherein four measurement areas (shown as dotted circles) are provided. The first measurement area 20a and the second measurement area 20b are located as in figure 1 and further a third measurement area 20c is located on the inlet side of the damper, and a fourth measurement area 20d is located on the outlet side of the damper. The third measurement area and the fourth measurement area are located on opposite surface to the first measurement area and the second measurement area, i.e. on the upper surface vs. the bottom surface. The third measurement area 20c comprises a third measurement probe 21c having a third measurement point, and a third wall 23c behind the third measurement point in air flow direction, i.e. between the third measurement point and the damper blade axis. The fourth measurement area 20d comprises a fourth measurement probe 21d having a fourth measurement point, and a fourth wall 23d in front of the fourth measurement point in air flow direction, i.e. between the fourth measurement point and the damper blade axis. The third wall 23c and the fourth wall 23d are perpendicular to the air flow direction like the first wall and the second wall.

In figure 1 and 2, the walls at the measurement areas are integral parts of the measurement probes, but they may be separate parts.

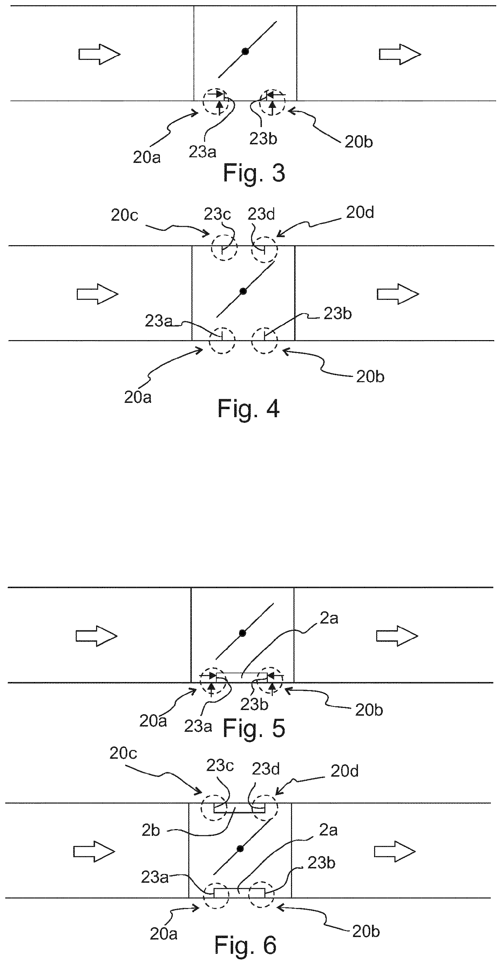

Figure 3 shows similar structure as figure 1, but in this embodiment, the walls 23a, 23b at the measurement areas 20a, 20b are separate parts from the measurement probes. Solid arrows shown in figure 3 shows optional locations of the measurement probes. For example, the first measurement probe at the first measurement area may be fastened to the damper surface or wall and the first wall is at a distance from the first measurement probe. Optionally, the first measurement probe may be fastened to the first wall so that first measurement point is on the surface of the wall that is against the air flow direction, i.e. the first wall is between the first measuring point and the damper blade axis.

The second measurement probe at the second measurement area may be fastened to the damper surface or wall and the second wall is at a distance from the second measurement probe. Optionally, the second measurement probe may be fastened to the second wall so that the second measurement point is on the surface of the wall so that the second wall is between the second measuring point and the damper blade axis.

Figure 4 shows an embodiment wherein four measurement areas are provided as in figure 2. Each measurement area 20a, 20b, 20c, 20d comprises a separate wall 23a, 23b, 23c, 23d and a separate measurement probe as in figure 3. Location of each measurement probe may be as in figure 3, i.e. fastened to the surface or wall of the damper so that the wall is at a distance from the measurement probe, or the measurement probe may be fastened to the wall.

Figures 5 and 6 show an embodiment, wherein the damper comprises protrusion 2a (figure 5) or protrusions 2a, 2b (figure 6) towards the center axis of the duct. The protrusion 2a, 2b may be seen as a cuboid object, extending towards the center, at one side of the damper. The protrusion or protrusions are provided so that cross-sectional area in radial direction at the location of the protrusion is smaller than the cross-sectional area outside the protrusion. The walls at the measurement areas (dotted circles) on the same side of the duct are part of the protrusion and a planar surface is provided between an edge of the first wall (edge towards the center) and an edge of the second wall (edge towards the center). The protrusion extends between side walls of the damper. The protrusion may cover the width of the damper partially or, optionally, the protrusion may extend from one side wall of the damper to the second (opposite) side wall of the damper.

Figure 5 shows one protrusion 2a located at the bottom side of the duct. Additionally, a second protrusion may be provided on the opposite side of the duct, as seen in figure 6. The measurement probes may be fastened in similar way as in embodiment of figure 3.

In figure 6, an additional protrusion 2b is located at the upper side of the duct, i.e. on opposite side to the other protrusion. The measurement probes may be fastened in similar way as in embodiment of figure 4.

The protrusion or protrusions may be part of the casing of the damper.

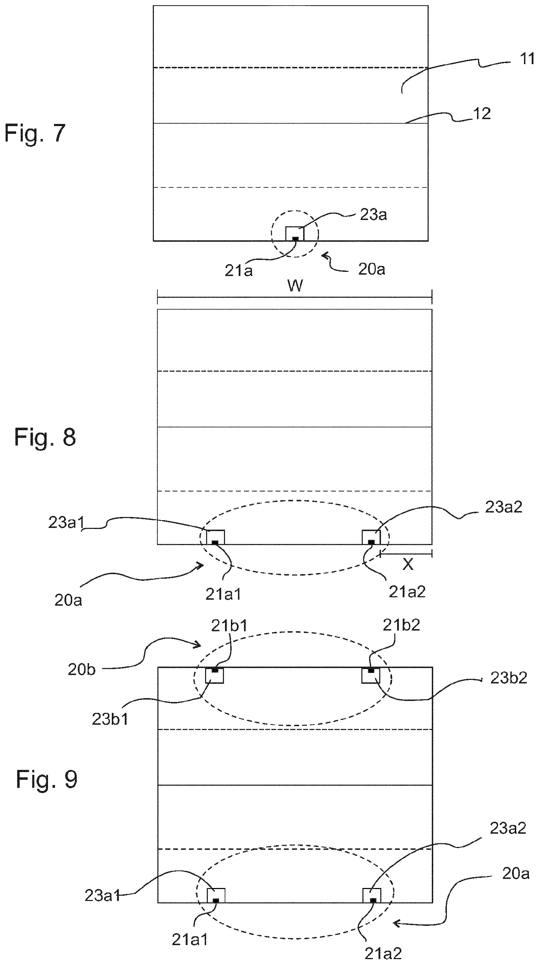

Figures 7, 8 and 9 show a cross-sectional view of the damper in radial direction. Figure 7 shows an embodiment comprising one measurement area at the bottom of the damper. As shown, one measurement area may comprise several measurement probes in width direction. In figure 8, the bottom area of the damper comprises a measurement area 20a with two measurement probes 21a1, 21a2 at a distance from each other. In figure 9, the upper area and bottom area each comprises measurement areas 20a, 20b with two measurement probes at a distance from each other. Optionally, the number of the measurement probes at each measurement area is three, four or five. One measurement area may have different number of measurement probes than other measurement area. Each measurement probe is arranged for defining a pressure, and an average pressure for each measurement area may be calculated based on these measured pressures. In figures 7, 8 and 9, next to each measurement probe 21a1, 21a2, 21b1, 21b2 is a wall 23a1, 23a2, 23b1, 23b2. However, there may be one wall and two or more measurement probes are located next to said wall. Each measurement area (in embodiments described in the description) may have more than one measurement probes and a wall or walls as shown in figure 7 to 9.

The measurement probe, which is closest to the side wall, is arranged at a distance X (seen in figure 8 but applies to all embodiments) from the closest side wall of the damper or duct (depending whereto the measurement probe is installed). The distance X may be fixed, or it may be dependent on the width W (seen only in figure 8 but applies to all embodiments of rectangular damper or duct) of the damper. Optionally, the distance X is at least 30 mm, 50 mm, 100 mm, 150 mm or 350 mm. Optionally, the distance X is from 50 to 150 mm. Optionally, the distance X is 1/3 or less of the width W. For example, if the width W is 200 mm, the distance X is 66 mm, etc. Naturally, these distance options apply to embodiments, where the damper and/or the duct, whereto to the measurement probes are fastened, has rectangular cross section. Optionally, each measurement probe is at least at a distance X (optional values shown above) from each perpendicular wall.

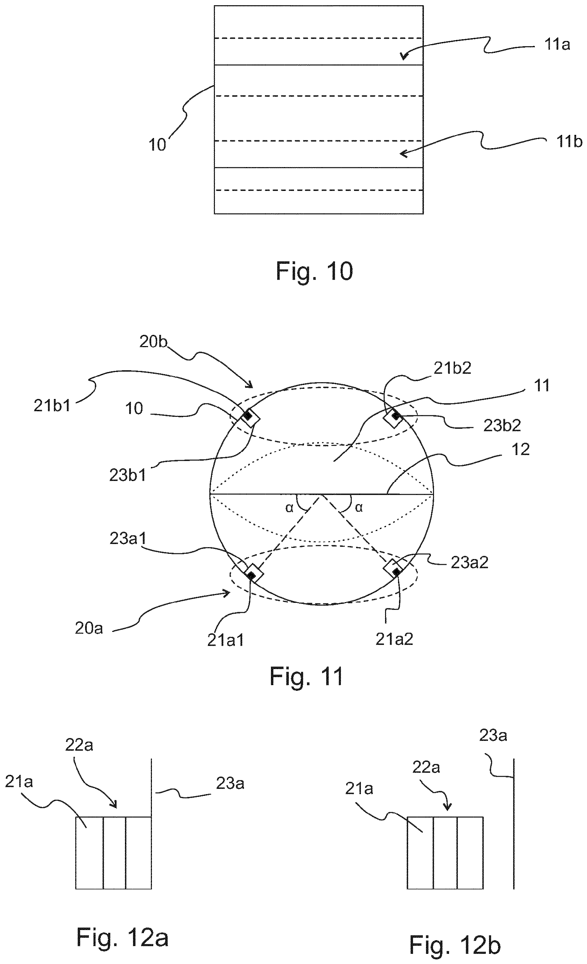

Figure 10 shows a cross-sectional view of a damper 10 having two damper blades 11a, 11b arranged on same plane in vertical direction. The damper blades in this figure are partially open. Optionally, the damper 10 may comprise three or more damper blades. Regardless of the number of the damper blades, measurement areas and measurement probes may be provided as explained together with figures 1 to 9.

Figure 11 shows a cross-sectional view of a damper 10, wherein the cross-sectional area of the damper (and the duct in which the damper is assembled) is circle. Regardless of the shape of the duct or damper, measurement areas 20a, 20b,... and the measurement probes 21a1, 21a2, 21b1, 21b2,... may be provided as explained together with figures 1 to 10. As understood, round duct or damper does not have separate surfaces. Thus, it should be understood that measurement areas are located in vertical direction below and/or above the rotational axis 12 of the damper blade or blades. The measurement probes 21a1, 21a2, 21b1, 21b2,... may be positioned so that they are at angle α to the rotational axis 12 of the damper blade. In figure 11, angle α is drawn for the measurement probe 21a1 and 21a2, but it should be understood that it applies to each one of the measurement probes. The angle α for each measurement probe may be the same, or it may vary depending on the measurement probe. The angle α may be for example 0, 15, 30, 45, 60, 75 or 90 degrees. Optionally, the angle α may be at range of mentioned angle values, e.g. from 15 to 75, 15 to 45, or 45 to 90 degrees, etc. In axial direction of the duct, the distance of the measurement probes from each other and/or from the rotational axis 12 of the blade(s) may be as explained in relation to the rectangular duct/damper. In embodiments, wherein the damper has a shape of a circle, and the measurement probes are positioned at an angle 0 (in same plane with the rotational axis 12), the rotational axis 12 of the damper blade 11 may form the first wall and/or second wall, etc. of the measurement areas 20a, 20b, etc., i.e. at least some or all of the measurement probes and the measurement points are arranged next to the rotational axis.

Figures 12a and 12b show a measurement area comprising a measurement probe and a wall. The reference numbers in the figure refers to first measurement area 20a, but the embodiments may be implemented to any one of the embodiments described in this disclosure. Figures 12a and 12b are to show how the components in themeasurement area may be related to each other. In figure 12a, the measurement probe 21a comprises a measurement point 22a, which is used to measure the pressure. The measurement point may be connected to an air duct or channel, which is further connected to a sensor for measuring the pressure. The measurement area comprises a wall 23a which is integrated part of the measurement probe 21a. In figure 12b, the measurement probe 21a comprises a measurement point 22a, which is used to measure the pressure. The measurement point may be connected to an air duct or channel, which is further connected to a sensor for measuring the pressure. The measurement area comprises a wall 23a which is separated part of the measurement probe 21a.

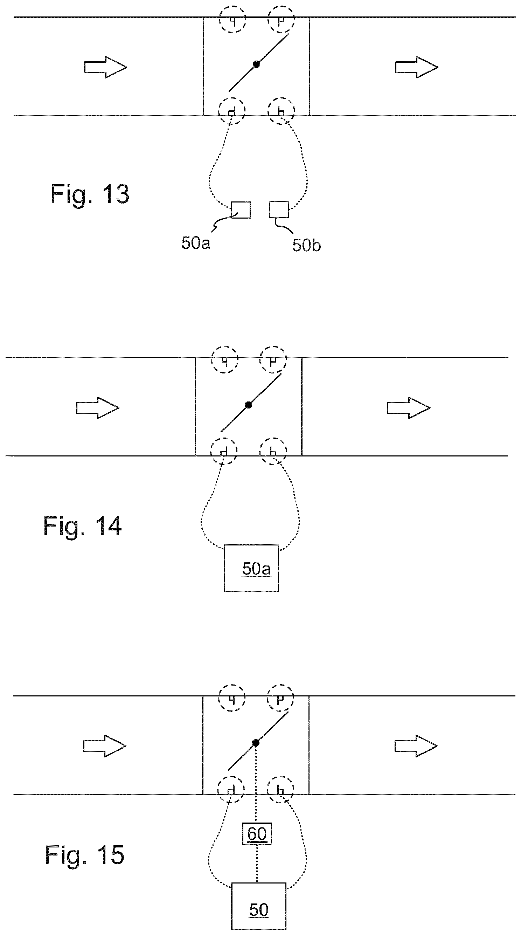

Figures 13 and 14 show an air flow control unit having a measurement unit comprising measurement sensor or sensors 50a, 50b located at a distance from the measurement probes. Each measurement probe may be connected (dotted line) to one measurement sensor (as in figure 14), or two or more measurement probes may be connected to same measurement sensor (as in figure 14). For example, measurement probe or probes at the first measurement area on inlet side of the damper may be connected to a first measurement sensor and the measurement probe or probes at the second measurement area on the outlet side of the damper may be connected to the same first measurement sensor. The measurement probe may be connected to the measurement sensor by an air channel. A measurement sensor or sensors may be implemented to any one of embodiments described together with figures 1 to 11. The sensor may be for example a pressure transducer.

Figure 15 shows an air control unit having a measurement unit connected to a controller 60. The controller is configured to receive pressure measurement data, e.g. pressure data or pressure difference, from the measurement unit and, optionally calculate pressure difference between the inlet side and the outlet side of the damper. The controller may be connected to the damper blade so that the position data of the damper blade position may be received. The controller may be connected to the damper blade directly or via motor controlling the damper blade. The controller 60 may be connected to the motor controlling at least one damper blade for adjusting the position of the damper based on the pressure difference. The controller may be configured calculate the air flow amount through the damper based on pressure difference and damper position and/or to adjust ventilation based on calculated air flow amount and given set point. The given set point may be for example certain amount of air which is needed to diffuse to a space. The controller may be connected to the sensor or sensors of the measurement unit for receiving the pressure data, i.e. pressure difference.

For calculating the air flow volume different K-factors may be stored to the controller. For example, each damper blade opening angle may have own K-factor stored for calculating the air flow. Thus, the air flow control unit may use variable K-factor depending on the damper blade opening angle.

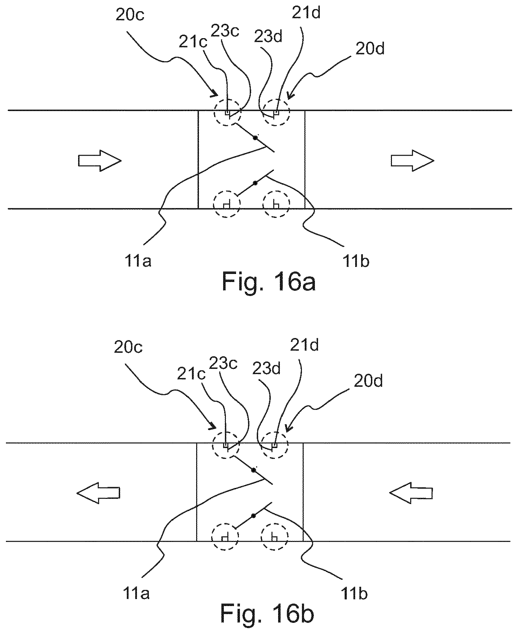

Figures 16a and 16b show a cross-sectional side views of a rectangular damper having two damper blades 11 each having own rotational axis and each damper blade is arranged to rotate about one rotational axis. The first damper blade 11a and the second damper blade 11b are arranged so that the rotational axis of each damper blade are parallel to each other and are arranged on same plane in relation to the air flow direction, i.e. the rotational axes are arranged in a plane perpendicular to the air flow direction. The damper blades 11, or their axes, may be fastened to the side walls of the damper, which side walls are perpendicular to the walls having the measurement areas 20c, 20d, etc. The two damper blades 11a, 11b are arranged to be opened so that adjacent damper blades are rotated in opposite directions. In figure 16a, the angle between the two damper blades opens towards the direction from which the air flowing. In an example, as shown in figure 16a, the air flow direction is presented with hollow arrows, and the air is flowing from left to right and the damper blades are opened against the air flow. When the air flow impacts the damper blades, the damper blades direct at least part of the air flow to flow between the damper blades. In another example, as shown in figure 16b, the air flow direction is presented with hollow arrows and the air is flowing from right to left, and the damper blades are opened in opposite direction than in figure 16a (in relation to the air flow direction), i.e. the angle between adjacent damper blades is opened in direction where the air is flowing. When the air flow impacts the damper blades, the damper blades direct at least part of the air flow to flow between the damper blade and walls of the damper. In an embodiment, wherein four or more damper blades, and the number of damper blades is even, are provided, two adjacent damper blades (starting from bottom or top walls) may be arranged to open as described above. Damper blades, as described here in relation to figures 16a or 16b, may be implemented to any one of the embodiments described in this disclosure, especially to embodiments wherein rectangular damper is provided.

The following features may be implanted to any embodiments described herein even though they are not presented together with each embodiment, i.e. following features are optional features to all embodiments described herein.

Each wall or at least some walls at measurement areas may be perpendicular or they may be inclined, i.e. angled, in relation to the air flow direction. The wall may be curved around the measurement point of the measurement probe next to said wall. For example, the curved wall may enclose 45-270 degrees around the measurement point. Optionally, the curved wall may enclose 45-180, 45-135, 45-90 degrees around the measurement point. Optionally, the minimum value of the range may be 30, 20, or 10 degrees.

At least some or all walls may be part of the casing of the damper. Optionally, the walls are separate components fastened to the damper or to the duct.

At least one or each wall may extend towards the center of the damper or duct so that the height of the wall(s) is 3 to 30 mm. Optionally, the height is 3 to 20 mm, 3 to 15 mm, 3 to 10 mm, or 3 to 5 mm. Optionally, the lower limit of the range may be 1 or 2 mm. Optionally, the height of the wall is 10 to 15 mm or 10 to 20 mm.

The measurement probe may be a unit having an elongated body comprising a hole through the elongated body in axial direction. The hole may be connected to an air channel for connecting the measurement probe to a pressure sensor. The air channel may be flexible, or it may be rigid channel, tube or pipe. The hole defines the measurement point of the measurement probe. The wall may be integral part of the measurement probe so that the wall is extending towards the center of the damper and in parallel direction to the hole.

The measurement areas at the same wall of the damp-er/duct may be located so that the maximum distance between measurement areas on opposite sides of the damper is 2,5 × of the length of the damper blade or blades. In an embodiment, the maximum distance between measurement areas on opposite sides of the damper is 2 x of the length of the damper blade or blades (the distance between tips of the damper blade). Minimum distance between measurement areas on opposite sides of the damper may be 0 mm, 0,5 x the length of the damper blade, or 0,8 x the length of the damper blade.

The maximum and minimum distance is the distance between two measurement areas that are in same line in air flow direction.

The measurement probes at the same wall of the damp-er/duct may be located so that the maximum distance between measurement probe on the inlet side and the measurement probe on the outlet side is 2,5 x the length of the damper blade or blades (the distance between tips of the damper blade). In an embodiment, the maximum distance between measurement probes on opposite sides of the damper is 2 x of the length of the damper blade or blades. Minimum distance between measurement probes on opposite sides of the damper may be 0 mm, 0,5 x the length of the damper blade, or 0,8 x the length of the damper blade. The maximum and minimum distance is the distance between two measurement probes that are in same line in air flow direction.

The measurement probes and the walls at the measurement areas may be fastened or part of the damper structure, or they may be fastened to the duct wall.

The duct may be round or rectangular and the damper installed to the duct may have similar shape. E.g. a round damper may be installed to a round duct.

The inlet side and/or the outlet side of the damper may comprise more than one measurement areas each comprising a measurement probe for measuring the pressure and a wall. Optionally, one measurement area comprises more than one measurement probe and more than one wall. Optionally, one measurement area comprises more than one measurement probes and one wider wall, which is next to these measurement probes (for example the protrusion described earlier).

The measurement areas may be located on different walls on the duct or damper. For example, measurement areas may be located at the bottom wall of the damper or duct, and/or measurement areas may be located at the upper wall of the damper or duct. Optionally or additionally, side wall or side walls of the damper or ducts may have measurement areas.

The damper may comprise one or more than one damper blades. For example, the damper may comprise two, three of four damper blades. Optionally, the number of the damper blades is even, i.e. two, four, six, etc.

The air flow control unit may be part of a ventilation system of a building, which system comprises several air flow control units according to any embodiments described herein. Each air flow control unit may be configured to control ventilation of a single space, or one air flow control unit may be configured to control ventilation of several spaces. Using a air flow control unit according to this disclosure, it is possible to install the dampers closer to objects, which causes turbulences or other deviances or disturbances in the air flow. For example, turns, Elbows or T-joints cause flow disturbances, and traditional devices and systems have required long distance from these objects to measure the pressure. This requirement is eliminated by using the wall structure at measurement areas and the air flow control units may be installed much closer to object causing disturbances to the air flow. Thus, the present system and units require less space than traditional systems.

The air flow is adjusted with an air flow control unit according to any one of the embodiments described herein. The method comprises steps of:
g. measuring pressure in front of the damper in air flow direction,
h. measuring pressure behind the damper in air flow direction,
i. detecting pressure difference,
j. receiving information of at least one damper blade position,
k. calculating air flow amount through the damper based on pressure difference and damper position,
l. adjusting ventilation based on calculated air flow amount and given set point.

The pressure may be measured by using one measurement probe on each side of the damper, or several measurement probes may be located on each side of the damper blade. The measurement data of different measurement probes on the same side or different side of the damper may be averaged.

For calculating air flow amount or volume through the damper, the air flow control unit may use variable K-factor which depends on the damper blade opening angle.

The given set point is a desired amount of air which should be flown through the damper or which should be introduced into the room or space.

It should be noted that the figures are not drawn in scale and are only for illustrative purpose. For example, walls at measurement areas and measurement probe sizes are exaggerated to illustrate their locations and details more clearly.

Although the invention has been the described in conjunction with a certain type of device, it should be understood that the invention is not limited to any certain type of device. While the present inventions have been described in connection with a number of exemplary embodiments, and implementations, the present inventions are not so limited, but rather cover various modifications, and equivalent arrangements, which fall within the purview of prospective claims.

## Claims

1. An air flow control unit for controlling air flow in a duct, comprising a damper (10), which is arranged to be installed to the duct, comprising:
- an inlet side, from which the air flow enters the damper,
- an outlet side, from which the air flow exits the damper, and
- at least one damper blade (11), arranged between the inlet side and the outlet side, configured to rotate about an axis (12) perpendicular to the air flow direction,
wherein the air flow unit comprises a measurement unit comprising at least two measurement areas (20a, 20b, 20c,...) so that one measurement area is arranged on different side of the damper (10) in air flow direction than another measurement area, wherein each measurement area comprises at least one measurement probe (21a, 21b, 21c,...) having a measurement point (22a, 22b, 22c,...) for measuring pressure,
**charcterized** in that
the first measurement area (20a) is arranged on the inlet side of the damper (10), and the first measurement area comprises a first measurement probe (21a) having a first measurement point (22a), and a first wall (23a) behind the first measurement point in air flow direction causing a change in the air flow at the first measurement area (20a).

2. The air flow control unit according to claim 1, wherein a second measurement area (20b) is arranged on the outlet side of the damper (10), and the second measurement area comprises a second measurement probe (21b) having a second measurement point (22b), and a second wall (23b) in front of the second measurement point (22b) in air flow direction causing a change in the air flow at the second measurement area.

3. The air flow control unit according to claim 2, wherein at least one of the first wall (23a) and the second wall (23b) is perpendicular to the air flow direction.

4. The air flow control unit according to claim 2, wherein at least one of the first wall (23a) and the second wall (23b) is angled to the air flow direction.

5. The air flow control unit according to any one of claims 2 to 4, wherein at least one of the walls (23a, 23b, 23c,...) is partially curved around the measurement point next to said wall.

6. The air flow control unit according to claim 5, wherein the curved wall encloses 45-270 degrees around the measurement point.

7. The air flow control unit according to any one of preceding claims, wherein the wall (23a, 23b, 23c,...) at each measurement area is integrated part of the measurement probe (21a, 21b, 21c,...) on said measurement area (20a, 20b, 20c,...).

8. The air flow control unit according to any one of claims 2 to 7, wherein at least one of the first wall (23a) and the second wall (23b) is integrated part of the damper (10) so that a casing of the damper forms the wall.

9. The air flow control unit according to any one of claims 2 to 8, wherein at least one of the first wall (23a) and the second wall (23b) is arranged to be installed to the wall of the duct.

10. The air flow control unit according to any one of claims 1 to 9, wherein the height of the walls (23a, 23b, 23c,...) is from 3 to 30 mm.

11. The air flow control unit according to any one of claims 1 to 10, comprising a controller (30) connected to the measurement unit for receiving pressure measurement data and for calculating pressure difference between the inlet side and outlet side of the damper (10) .

12. The air flow control unit according to claim 11, wherein the controller (60) is connected to a motor controlling at least one damper blade (11) for adjusting the position of the damper based on the pressure difference.

13. The air flow control unit according to any one of claims 1 to 12, wherein the measurement unit comprises two or more measurement areas (20a, 20b, 20c, 20d) on each side of the damper (10).

14. The air flow control unit according to claim 13, wherein each side of the damper, in air flow direction, comprises four measurement probes.

15. The air flow control unit according to claim 13 or 14, wherein the pressure at each side of the damper is averaged.

16. The air flow control unit according to any one of claims 1 to 15, wherein the maximum distance between measurement probe on the inlet side and the measurement probe on the outlet side is 2,5 × the length of the damper blade (11).

17. A ventilation system of a building comprising two or more air flow control units according to any one of the preceding claims.

18. A method for adjusting ventilation with an air flow control unit according to any one of claims 1 to 16, wherein the method comprises steps of:
m. measuring pressure in front of the damper in air flow direction,
n. measuring pressure behind the damper in air flow direction,
o. detecting pressure difference,
p. receiving information of at least one damper blade (11) position,
q. calculating air flow amount through the damper based on pressure difference and damper position,
r. adjusting ventilation based on calculated air flow amount and given set point.
